# EUROPÄISCHE PATENTSCHRIFT

(11) **EP 2 718 042 B1**
(45) Veröffentlichungstag und Bekanntmachung des Hinweises auf die Patenterteilung: **23.09.2015**
(21) Anmeldenummer: 12724581.9
(22) Anmeldetag: 30.04.2012
(51) Int. Cl.: B22D 11/16, G05B 13/04, G05B 17/02, B22D 11/12, B21B 1/46

(54) **VERFAHREN ZUR VERARBEITUNG EINES STRANGGEGOSSENEN MATERIALS**
METHOD FOR PROCESSING A CONTINUOUSLY CAST MATERIAL
PROCÉDÉ DE TRANSFORMATION D'UN MATÉRIAU COULÉ EN CONTINU

(30) Priorität: 09.06.2011 DE 102011077322
(43) Veröffentlichungstag der Anmeldung: 16.04.2014
(73) Patentinhaber: SMS group GmbH, 40237 Düsseldorf (DE)
(72) Erfinder: HOVESTÄDT, Erich, 46414 Rhede (DE); PLOCIENNIK, Uwe, 40882 Ratingen (DE); REIFFERSCHEID, Markus, 41352 Korschenbroich (DE)
(74) Vertreter: Klüppel, Walter
(86) Internationale Anmeldenummer: PCT/EP2012/057881
(87) Internationale Veröffentlichungsnummer: WO 2012/168000

(56) Entgegenhaltungen:
- DE-C1- 19 744 815

## Beschreibung

Die Erfindung betrifft ein Verfahren zur Verarbeitung eines stranggegossenen Materials, wobei das Material nach dem Stranggießen in einer Stranggießanlage in einzelne Einheiten, insbesondere Brammen, geteilt wird, wobei die Einheiten in einen Lagerplatz verbracht und nach einer Lagerzeit vom Lagerplatz zu einer Bearbeitungs- oder Behandlungseinrichtung transportiert und hier bearbeitet oder behandelt werden, wobei für zumindest eine Anzahl von Einheiten an zumindest einem Ort eine Erfassung der Temperatur oder der Temperaturverteilung erfolgt, wobei für die Einheit ein thermisches Ersatzmodell in einem Rechner bereitgestellt wird und die erfasste Temperatur oder Temperaturverteilung an dem zumindest einen Ort dem Ersatzmodell als Randbedingung für die Einheit aufgegeben wird, wobei anhand des thermischen Ersatzmodells zumindest für einen zeitlichen Abschnitt der weitere Temperaturverlauf der Einheit errechnet und dieser bei der sich anschließenden Bearbeitung oder Behandlung der Einheit zugrunde gelegt wird.

Ein solches Verfahren ist im Stand der Technik hinlänglich bekannt. Es wird hierzu auf die DE 197 44 815 C1 hingewiesen. Nach dem Stranggießen wird das Gießprodukt zumeist mittels Brennschneiden in einzelne Brammen definierter Länge zerlegt. Die heißen Brammen werden dann in ein Brammenlager verbracht. Nach einer bestimmten Zeit werden die Brammen dann aus dem Brammenlager abtransportiert, um beispielsweise gewalzt zu werden oder um einer Wärmebehandlung unterzogen zu werden.

Im Stand der Technik sind Lösungen bekannt, die eine von einem Rechner gesteuerte Produktionssteuerung vorsehen, so dass die Abläufe optimiert werden können. Beispiele hierfür zeigen die US 5,808,891, die US 6,560,502 B1 und die US 7,799,151 B2. Andere einschlägige Lösungen zeigen die DE 197 44 815 C1 und die DE 196 03 233 C1.

Ein ähnlicher Offenbarungsgehalt geht aus dem Beitrag von Hans Voigt et al. "Untersuchungen zum Heißtransport von Stranggussbrammen" (in "Stahl und Eisen" 110 (1990) Nr. 6, Seiten 97 bis 105) hervor. Der Beitrag von Bulent H. Simsek "Dynamic simulation of dual-line continuous strip processing operations" (in "Iron and Steel Engineer", Juni 1997, Seiten 45 bis 54) beschreibt ebenfalls den Einsatz von Simulationsmodellen zur Bestimmung des thermischen Verhaltens von Brammen.

Die bekannten Lösungen sind noch nicht optimal, wenn berücksichtigt wird, dass eine Bramme nach dem Brennschnitt und über die nachfolgende Einlagerung im Brammenlager bis hin zum weiteren Transport bis zur weiteren Verarbeitung allmählich einer Temperaturveränderung unterliegt. Dabei gilt, dass in Abhängigkeit der vorgesehenen weiteren Verarbeitung bzw. Behandlung für die Bramme eine optimale Temperatur definierbar ist, die möglichst genau eingehalten werden sollte, um ein optimales Ergebnis zu erzielen und mit dem Energieeinsatz ökonomisch umzugehen. Dieses Ziel steht mitunter im Gegensatz zu der Anforderung, das Brammenlager möglichst optimal zu nutzen, das heißt es bestmöglich zu belegen.

Der Erfindung liegt daher die Aufgabe zugrunde, ein Verfahren der eingangs genannten Art so fortzubilden, dass es möglich wird, eine optimale Lagerbelegung im Brammenlager zu erreichen, während gleichzeitig sichergestellt werden soll, dass die Brammen für die jeweils nachfolgend geplante Bearbeitung bzw. Behandlung optimal temperiert sind, wobei auch der Energieeinsatz möglichst gering bleiben soll.

Die Lösung dieser Aufgabe durch die Erfindung ist dadurch gekennzeichnet, dass die Ermittlung der Temperatur oder der Temperaturverteilung mittels mindestens eines Pyrometers, mittels mindestens eines Wärmescanners und/oder mittels mindestens einer Wärmebildkamera erfolgt, wobei die Ermittlung der Temperatur oder der Temperaturverteilung während der Bewegung der Einheit erfolgt, indem das Pyrometer, der Wärmescanner und/oder die Wärmebildkamera an einem mobilen Element zur Handhabung oder zum Transport der Einheit angeordnet sind.

Vorzugsweise erfolgt an zumindest einem zweiten Ort eine Erfassung der Temperatur oder der Temperaturverteilung der Einheit, wobei bei Feststellen einer Abweichung zu den mittels des thermischen Ersatzmodells berechneten Werten eine Anpassung der berechneten Werte erfolgt.

Wärmeein- und -austräge während des Transports und der Handhabung des Elements werden dabei bevorzugt berücksichtigt, insbesondere eine erfolgende Kühlung oder eine erfolgende Erhitzung des Elements.

Die Übertragung von Messwerten für die Temperatur oder der Temperaturverteilung, von Daten zur Identifikation einer Einheit und/oder von Daten des Orts einer Einheit zum Rechner erfolgen bevorzugt drahtlos.

Weiterhin kann vorgesehen werden, dass an einem dritten Ort die berechnete oder gemessene Temperatur oder die Temperaturverteilung der Einheit mit mindestens einem vorgegebenen Sollwert verglichen wird, um die Eignung der Einheit für eine vorgesehene Bearbeitung oder Behandlung festzustellen, wobei die Sollwerte vorzugsweise in einem werkstoffspezifischen Wärmebehandlungskatalog hinterlegt sind.

Der Rechner kann gemäß einer Weiterbildung die Ausgabe eines Informationssignals veranlassen, wenn am dritten Ort unter Berücksichtigung einer Toleranzgrenze Abweichungen zwischen der berechneten oder gemessenen Temperatur oder Temperaturverteilung und dem vorgegebenen Sollwert festgestellt wird.

Das mobile Element zur Handhabung oder zum Transport der Einheit ist dabei bevorzugt ein Kran.

Die Festlegung der Starttemperatur oder Start-Temperaturverteilung einer Einheit zu Beginn der Simulationsrechnung kann aus einer Simulationsrechnung des vorgeschalteten Stranggießprozesses erfolgen und/oder unter Nutzung der am ersten Ort gemessenen Temperatur oder Temperaturverteilung.

Dem thermischen Ersatzmodell wird bevorzugt eine zwei- oder dreidimensionale Wärmeleitungsgleichung zugrunde gelegt.

Die Wärmeleitungsleichung kann mittels Finiter Differenzen, Finiter Volumen oder Finiter Elemente numerisch gelöst werden.

Vorgeschlagen wird also ein Simulationsmodell für die Temperaturfeldermittlung des stranggegossenen Materials, insbesondere der Bramme, in der Adjustage, einschließlich Brammenlager, Gruben und Hauben, gekoppelt mit einer Temperaturmessung des Materials.

Eine Thematik ist dabei die möglichst genaue Bestimmung der Temperatur bzw. des Temperaturfeldes einer Bramme zu Beginn der Simulation, das heißt im Sinne von vorgegebenen Randbedingungen als Startwerte für die Simulation.

Hierfür besteht zunächst die Möglichkeit, die Temperatur bzw. das Temperaturfeld der Bramme ausschließlich aus der Simulation des vorgeschalteten Stranggießprozesses zu gewinnen.

Es kann alternativ vorgesehen werden, den Startwert für die Temperatur bzw. für die Temperaturverteilung aus der Temperaturmessung am ersten Ort zu gewinnen.

Als weitere Möglichkeit besteht die Kombination der beiden genannten Verfahren, das heißt eine Temperaturgewinnung aus der Simulation des vorgeschalteten Stranggießprozesses mit einer Adaption der Temperaturmessung durch Temperatur-Messwerte, die am ersten Ort gewonnen wurden; demgemäß ist hier vorgesehen, den Messwert bzw. die Messwerte am ersten Ort dafür zu nutzen, eine Anpassung der durch Simulation gewonnenen Temperatur vornehmen zu können.

Mit dem vorgeschlagenen Vorgehen können verschiedene Vorteile erreicht werden:
Zunächst ist eine optimale Lagerbelegung, das heißt Belegung der Lagerkapazität, durch Kenntnis der jeweiligen Brammentemperaturen möglich.

Beim Warmeinsatz können die Temperaturintervalle, mit denen die Brammen in den nächsten Prozessschritt gelangen sollen, besser eingehalten und kontrolliert werden.

Weiterhin ist eine Verbesserung der Werkstoffeigenschaften des Walzprodukts insbesondere bei kritischen Werkstoffen durch die Verwendung, das heißt den Einsatz, optimal temperierter Brammen möglich.

Möglich ist auch die Inspektion und gegebenenfalls die Nachbearbeitung nicht optimal temperierter Brammen vor der Weiterverarbeitung durch die Kontrolle des Brammentemperaturverlaufs in der Adjustage bzw. im Brammenlager.

Vorteilhaft wird auch die Unfallgefahr durch die Vermeidung bzw. Verhinderung von zu warm abtransportierem Material gemindert. Zu heiße Brammen führen zur Zerstörung von Transportvorrichtungen (Wagons).

Von Vorteil ist auch, dass eine Adaption des Simulationsmodells durch den Vergleich gemessener und berechneter Temperaturen möglich ist.

Ausgehend vom Brennschnitt werden für die Brammen für alle Positionen in der Adjustage auf dem Weg zum Brammenlager die Temperaturen berechnet. Mit Kenntnis der Parameter des Gießprozesses der betrachteten Bramme kann das Starttemperaturfeld für die Bramme bestimmt werden. Durch Temperaturmessgeräte wie Pyrometer, Scanner oder Wärmebildkamera lassen sich die Oberflächentemperaturen der Bramme an definierten Orten und Zeiten messen. Die Anordnung der Temperaturmesseinrichtungen können stationär oder mobil sein, wie z. B. an einem Kran, der die Brammen ein- und auslagert. So erhält man für unterschiedliche Positionen und Zeiten den Temperaturverlauf der Brammen. Diese gemessenen Temperaturen werden zur Adaption mit den simulierten Berechnungen verglichen. Die Übertragung der Brammenidentifikation, der gemessenen Oberflächentemperaturen und die aktuelle Brammenposition erfolgt bevorzugt drahtlos.

Zur Kontrolle der Werkstoffeigenschaften werden die gemessenen oder berechneten Temperaturen mit den Solltemperaturen, die in einem Wärmebehandlungskatalog werkstoffspezifisch hinterlegt sind, an markanten Positionen verglichen. Markante Punkte sind beispielsweise die Stapelbildung für die Abkühlung an Luft, in Gruben oder unter Hauben, sowie das Auslagern der Brammen aus den Stapeln. Weitere Positionen sind die Temperaturen vor einer Wasserkühlung oder vor und nach einer Oberflächenbearbeitung.

Werden die Solltemperaturen nicht eingehalten, wird eine Meldung zum Stranggießrechner gesendet. Der Stranggießrechner wird dann über den Materialverfolgungsrechner eine zusätzliche Inspektion der nicht ordnungsgemäß abgelegten Bramme veranlassen. Je nach Befund erhält die Bramme eine zusätzliche Oberflächenbearbeitung. Dies reduziert die Abwertung der Bramme im nachfolgenden Prozess.

Das Simulationsmodell berechnet für jede einzelne Bramme das Temperaturfeld. Hierfür wird die allgemein bekannte Wärmeleitungsgleichung zugrunde gelegt.

Dabei wird die drei- bzw. zweidimensionale Wärmeleitungsgleichung mit Hilfe bekannter numerischer Verfahren (z. B. Finite Differenzen, Finite Volumen, Finite Elemente) gelöst. Die unterschiedlichen Kühlvarianten, wie die Luftkühlung auf dem Rollgang, die Intensivkühlung in der Wasserkühlstrecke, die Wärmezufuhr während der Oberflächenbearbeitung, die Abkühlung im Stapel an Luft mit Strahlungsaustausch an die umgebenden Nachbarstapel, die Abkühlung der Stapel in Gruben und Hauben oder in Warmhalterollgängen und Wärmetransportvorrichtungen werden durch entsprechende Randbedingungen berücksichtigt.

Dies sind bei der Luftkühlung die natürliche Konvektion und Strahlung, bei der Intensivkühlung die erzwungene Konvektion, bei der Oberflächenbearbeitung die Wärmequelle durch die Bearbeitung, bei der Stapelkühlung der Kontakt zwischen den gestapelten Brammen, der Strahlungsaustausch zwischen den Nachbarstapeln und die natürliche Konvektion, bei der Abkühlung in Gruben und Hauben die Wärmedurchgangszählen für die umgebende Isolierung der Gruben oder Hauben und beim Transport im Warmhalterollgang oder im Warmtransport die Wärmedurchgangszahl der Isolierung oder von Wärmequellen wie Brenner.

Für die Berechnung ändern sich im Brammenlager mit jeder Ein- und Auslagerung einer Bramme die Randbedingungen, da der Kontakt zwischen den Brammen im Stapel und die Einstrahlzahlen für den Strahlungsaustausch durch die geometrische Änderung der Stapelform in der Berechnung berücksichtigt wird.

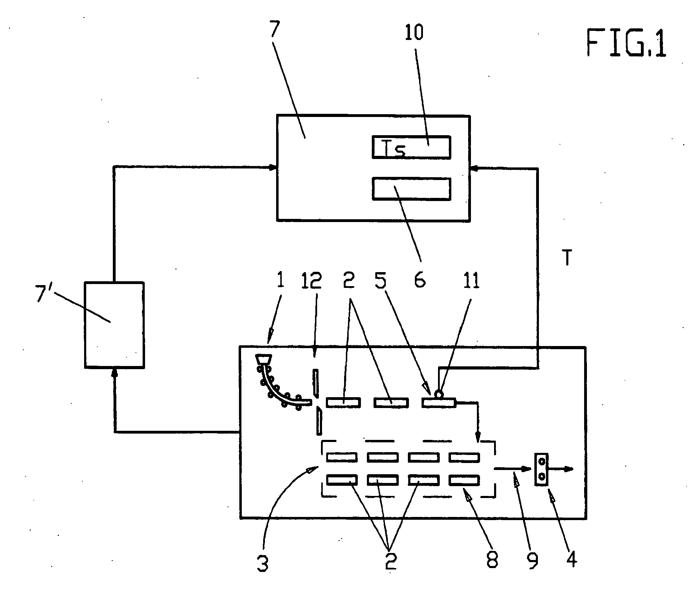

In der Zeichnung ist ein Ausführungsbeispiel der Erfindung dargestellt. Die einzige Figur zeigt eine schematische Darstellung einer Stranggießanlage samt nachgeordneter Bearbeitungs- bzw. Behandlungsanlage für Brammen, wobei zwischen Stranggießanlage und Bearbeitungs- bzw. Behandlungsanlage ein Brammenlager angeordnet ist.

In einer Stranggießanlage 1 wird ein Metallstrang gegossen, der hinter der Stranggießanlage 1 mittels eines Brennschneiders 12 in einzelne Einheiten in Form von Brammen 2 geteilt wird. Die Brammen werden anschließend in ein Brammenlager 3 verbracht. Nach einer definierten Einlagerungszeit im Brammenlager 3 werden die Brammen 2 zu einer Bearbeitung- oder Behandlungseinrichtung 4 verbracht und hier bearbeitet, zum Beispiel gewalzt.

Der gesamten Anlage ist ein Rechner 7 sowie ein Materialverfolgungsrechner 7' zugeordnet. Im Rechner 7 ist ein thermisches Ersatzmodell 6 für jede verfolgte Bramme 2 gespeichert. Weiterhin befindet sich hier ein Wärmebehandlungskatalog 10, in dem für definierte Behandlungsoperationen für die Bramme insbesondere Soll-Temperaturen T_{S} gespeichert, das heißt hinterlegt sind.

Im Rechner 7 kann unter Nutzung des thermischen Modells 6 für jede Bramme 2 eine thermische bzw. thermodynamische Simulationsrechnung erfolgen, so dass berechnet werden kann, wie sich die Temperatur bzw. die Temperaturverteilung der Bramme über der Zeit und dem Ort verändert. Hierzu ist es allerdings nötig, der numerischen Lösung der Wärmeleitungsgleichung (partielle Differentialgleichung für die Temperaturveränderung über dem Ort und der Zeit) einen entsprechenden Startwert bzw. eine entsprechende Randbedingung zuzuordnen bzw. vorzugeben.

Hierzu wird an einem ersten Ort 5 mittels eines Temperatursensors 11 die Temperatur T der Bramme 2 bestimmt und dem thermischen Ersatzmodell 6 vorgegeben.

In diesem Zusammenhang besteht die Möglichkeit, dass die Festlegung der Starttemperatur bzw. der Start-Temperaturverteilung einer Bramme zu Beginn der Simulationsrechnung aus einer Simulationsrechnung des vorgeschalteten Stranggießprozesses erfolgt. Alternativ oder additiv ist es auch möglich, dass die Festlegung der Starttemperatur unter Nutzung der am ersten Ort 5 gemessenen Temperatur oder Temperaturverteilung erfolgt.

Mit Hilfe des Materialverfolgungsrechners 7' wird der jeweils aktuelle Ort der Bramme, hier der Ort 5, erfasst und dem Ersatzmodell ebenfalls als Eingangsgröße zugeführt.

Der Rechner 7 ist dann in der Lage, ausgehend von dem aktuellen Aufenthaltsort 5 der Bramme und der dort gemessenen Temperatur T der Bramme, deren Temperatur bzw. Temperatur-Verlauf für spätere Zeiten an anderen Orten vorauszuberechnen, das heißt zu simulieren.

An einem zweiten Ort 8 kann eine weitere Temperaturmessung erfolgen, um das Rechenergebnis für die betreffende Bramme 2 zu überprüfen und bei Abweichungen zu modifizieren bzw. zu korrigieren.

An einem dritten Ort 9 kann eine weitere Temperaturmessung erfolgen und durch den Rechner 7 die Ausgabe eines Informationssignals veranlasst werden, falls an diesem Ort 9 der gemessene Wert - verglichen mit dem berechneten Wert-außerhalb einer vorgegebenen maximalen Abweichung liegt.

An den Orten 5, 8 und 9 liegen demgemäß Daten zur Brammenidentifikation vor, sowie für die gemessene Temperatur T die Positionsdaten und die Zeit. Bei festgestellten Abweichungen zwischen den simulierten Temperaturen für die Orte 8 und 9 und den dort gemessenen Ist-Temperaturen können die Abweichungen dazu dienen, das Ersatzmodell 6 bzw. die Simulationsrechnung an die Realität anzupassen.

Bevorzugte Orte der Messung - sei es zur Vorgabe von Randbedingungen für die Temperatur, sei es zur Überprüfung berechneter Temperäturwerte durch Messwerte - sind der Ort des Brennschnitts (Brennschneider 12), der Ort des Einund Ausstapelns, der Ort des Öffnens und Schließens von Hauben und Gruben, der Ort des Ein- und Austritts zum Warmtransport und der Ort der Oberflächennachbearbeitung.

### Bezugszeichenliste:

- 1: Stranggießanlage
- 2: Einheit (Bramme)
- 3: Lagerplatz (Brammenlager)
- 4: Bearbeitungs- oder Behandlungseinrichtung
- 5: erster Ort
- 6: thermisches Ersatzmodell
- 7: Rechner
- 7': Materialverfolgungsrechner
- 8: zweiter Ort
- 9: dritter Ort
- 10: Wärmebehandlungskatalog (Datenbank)
- 11: Pyrometer, Wärmescanner, Wärmebildkamera
- 12: Brennschneider

- T: Temperatur
- T_{S}: Sol-Temperatur

## Patentansprüche

1. Verfahren zur Verarbeitung eines stranggegossenen Materials, wobei das Material nach dem Stranggießen in einer Stranggießanlage (1) in einzelne Einheiten (2), insbesondere Brammen, geteilt wird, wobei die Einheiten (2) in einen Lagerplatz (3) verbracht und nach einer Lagerzeit vom Lagerplatz (3) zu einer Bearbeitungs- oder Behandlungseinrichtung (4) transportiert und hier bearbeitet oder behandelt werden, wobei für zumindest eine Anzahl von Einheiten (2) an zumindest einem Ort (5) eine Erfassung der Temperatur (T) oder der Temperaturverteilung erfolgt, wobei für die Einheit (2) ein thermisches Ersatzmodell (6) in einem Rechner (7) bereitgestellt wird und die erfasste Temperatur (T) oder Temperaturverteilung an dem zumindest einen Ort (5) dem Ersatzmodell (6) als Randbedingung für die Einheit (2) aufgegeben wird, wobei anhand des thermischen Ersatzmodells (6) zumindest für einen zeitlichen Abschnitt der weitere Temperaturverlauf der Einheit (2) errechnet und dieser bei der sich anschließenden Bearbeitung öder Behandlung der Einheit (2) zugrunde gelegt wird,
**dadurch gekennzeichnet,**
**dass** die Ermittlung der Temperatur (T) oder der Temperaturverteilung mittels mindestens eines Pyrometers, mittels mindestens eines Wärmescanners und/oder mittels mindestens einer Wärmebildkamera (11) erfolgt, wobei die Ermittlung der Temperatur (T) oder der Temperaturverteilung während der Bewegung der Einheit (2) erfolgt, indem das Pyrometer, der Wärmescanner und/oder die Wärmebildkamera (11) an einem mobilen Element zur Handhabung oder zum Transport der Einheit (2) angeordnet sind.

2. Verfahren nach Anspruch 1, **dadurch gekennzeichnet, dass** an zumindest einem zweiten Ort (8) eine Erfassung der Temperatur (T) oder der Temperaturverteilung der Einheit (2) erfolgt, wobei bei Feststellen einer Abweichung zu den mittels des thermischen Ersatzmodells (6) berechneten Werten eine Anpassung der berechneten Werte erfolgt.

3. Verfahren nach Anspruch 1 oder 2, **dadurch gekennzeichnet, dass** Wärmeein- und -austräge während des Transports und der Handhabung des Elements (2) berücksichtigt werden, insbesondere eine erfolgende Kühlung oder eine erfolgende Erhitzung des Elements (2).

4. Verfahren nach einem der Ansprüche 1 bis 3, **dadurch gekennzeichnet, dass** die Übertragung von Messwerten für die Temperatur (T) oder die Temperaturverteilung, von Daten zur Identifikation einer Einheit (2) und/oder von Daten des Orts einer Einheit (2) zum Rechner (7) drahtlos erfolgt.

5. Verfahren nach einem der Ansprüche 1 bis 4, **dadurch gekennzeichnet, dass** an einem dritten Ort (9) die berechnete oder gemessene Temperatur (T) oder die Temperaturverteilung der Einheit (2) mit mindestens einem vorgegebenen Sollwert (T_{S}) verglichen wird, um die Eignung der Einheit (2) für eine vorgesehene Bearbeitung oder Behandlung festzustellen, wobei die Sollwerte vorzugsweise in einem werkstoffspezifischen Wärmebehandlungskatalog (10) hinterlegt sind.

6. Verfahren nach Anspruch 5, **dadurch gekennzeichnet, dass** der Rechner (7) die Ausgabe eines Informationssignals veranlasst, wenn am dritten Ort (9) unter Berücksichtigung einer Toleranzgrenze Abweichungen zwischen der berechneten oder gemessenen Temperatur (T) oder Temperaturverteilung und dem vorgegebenen Sollwert (T_{S}) festgestellt wird.

7. Verfahren nach einem der Ansprüche 1 bis 6, **dadurch gekennzeichnet, dass** das mobile Element zur Handhabung oder zum Transport der Einheit (2) ein Kran ist.

8. Verfahren nach einem der Ansprüche 1 bis 7, **dadurch gekennzeichnet, dass** die Festlegung der Starttemperatur (T) oder Start-Temperaturverteilung einer Einheit (2) zu Beginn der Simulationsrechnung aus einer Simulationsrechnung des vorgeschalteten Stranggießprozesses erfolgt und/oder unter Nutzung der am ersten Ort (5) gemessenen Temperatur (T) oder Temperaturverteilung erfolgt.

9. Verfahren nach einem der Ansprüche 1 bis 8, **dadurch gekennzeichnet, dass** dem thermischen Ersatzmodell (6) eine zwei- oder dreidimensionale Wärmeleitungsgleichung zugrunde gelegt wird, wobei insbesondere die Wärmeleitungsleichung (6) mittels Finiter Differenzen, Finiter Volumen oder Finiter Elemente numerisch gelöst wird.

## Claims

1. Method of processing a continuously cast material, wherein the material after continuous casting in a continuous casting plant (1) is divided into individual units (2), in particular slabs, wherein the units (2) are brought into a storage place (3) and after a storage time are transported from the storage place (3) to processing or treatment equipment (4) and processed or treated there, wherein detection of the temperature (T) or temperature distribution is carried out for at least a number of units (2) at at least one location (5), wherein a thermal substitute model (6) is provided for the unit (2) in a computer (7) and the detected temperature (T) or temperature distribution at the at least one location (5) is supplied to the substitute model (6) as a boundary condition for the unit (2), wherein the further temperature plot of the unit (2) is computed by way of the thermal substitute model (6) at least for a time segment and this is the basis for the subsequent processing or treatment of the unit (2), **characterised in that** the determination of the temperature (T) or the temperature distribution is carried out by means of at least one pyrometer, by means of at least one heat scanner and/or by means of at least one thermal imaging camera (11), wherein the detection of the temperature (T) or the temperature distribution is carried out during movement of the unit (2) **in that** the pyrometer, heat scanner and/or thermal imaging camera (11) is or are arranged at a mobile element for handling or transport of the unit (2).

2. Method according to claim 1, **characterised in that** detection of the temperature (T) or the temperature distribution of the unit (2) is carried out at least one second location (8), wherein on determination of a difference from the values computed by means of the thermal substitute model (6) an adaptation of the computed values is carried out.

3. Method according to claim 1 or 2, **characterised in that** heat intakes and discharges during the transport and handling of the element (2) are taken into consideration, particularly a cooling or heating of the element (2) taking place.

4. Method according to any one of claims 1 to 3, **characterised in that** the transmission of measurement values for the temperature (T) or the temperature distribution, of data for identification of a unit (2) and/or of data of the location of a unit (2) to the computer (7) is carried out wirelessly.

5. Method according to any one of claims 1 to 4, **characterised in that** at a third location (9) the computed or measured temperature (T) or the temperature distribution of the unit (2) is compared with at least one predetermined target value (T_{S}) in order to establish the suitability of the unit (2) for an intended treatment or handling, wherein the target values are preferably filed in a heat treatment catalogue (10) specific to material.

6. Method according to claim 5, **characterised in that** the computer (7) causes output of an information signal if at the third location (9), with consideration of a tolerance limit, differences between the computer or measured temperature (T) or temperature distribution and the predetermined target value (T_{S}) are determined.

7. Method according to any one of claims 1 to 6, **characterised in that** the mobile element for handling or transport of the unit (2) is a crane.

8. Method according to any one of claims 1 to 7, **characterised in that** determination of the start temperature (T) or start temperature distribution of a unit (2) is carried out at the start of the simulation computation from a simulation computation of the upstream continuous casting process and/or is carried out with use of the temperature (T) or temperature distribution measured at the first location (5).

9. Method according to any one of claims 1 to 8, **characterised in that** the thermal substitute model (6) is based on a two-dimensional or three-dimensional heat conduction equation, wherein, in particular, the heat conduction equation (6) is numerically solved by means of finite differences, finite volumes or finite elements.

## Revendications

1. Procédé pour le traitement d'une matière que l'on obtient par coulée continue, dans lequel la matière est séparée, après la coulée continue dans une installation de coulée continue (1) en unités individuelles (2), en particulier en brames, dans lequel les unités (2) sont amenées à un endroit d'entreposage (3) et après un laps de temps d'entreposage, sont transportées depuis l'endroit d'entreposage (3) jusqu'à un dispositif de traitement ou de manipulation (4) pour y être traitées ou manipulées, dans lequel pour au moins un certain nombre d'unités (2) un enregistrement de la température (T) ou de la distribution de la température a lieu à au moins un endroit (5), dans lequel, pour l'unité (2), on prévoit un modèle thermique de rechange (6) dans un ordinateur (7) et on fait passer la température (T) ou la distribution de température enregistrée audit au moins un endroit (5) au modèle de rechange (6) à titre de condition aux limites pour l'unité (2), dans lequel, sur base du modèle thermique de rechange (6), on calcule au moins sur un certain laps de temps l'allure ultérieure de la température de l'unité (2) et on prend ce calcul pour base lors du traitement ou de la manipulation de l'unité (2) qui s'ensuit, **caractérisé en ce que** la détermination de la température (T) ou de la distribution de température a lieu au moyen d'au moins un pyromètre, au moyen d'au moins un scanner thermique et/ou au moyen d'au moins une caméra thermique (11), la détermination de la température (T) ou de la distribution de température ayant lieu au cours du déplacement de l'unité (2) de manière telle que le pyromètre, le scanner thermique et/ou la caméra thermique (11) sont disposés sur un élément mobile pour la manipulation ou pour le transport de l'unité (2).

2. Procédé selon la revendication 1, **caractérisé en ce que**, à au moins un deuxième endroit (8), a lieu un enregistrement de la température (T) ou de la distribution de température de l'unité (2), dans lequel, lors de la constatation d'une déviation par rapport aux valeurs calculées au moyen du modèle thermique de rechange (6), on procède à une adaptation des valeurs calculées.

3. Procédé selon la revendication 1 ou 2, **caractérisé en ce qu'**on prend en compte les entrées et les sorties de chaleur au cours du transport et de la manipulation de l'élément (2), en particulier un refroidissement qui se produit ou un réchauffement qui se produit en ce qui concerne l'élément (2).

4. Procédé selon l'une quelconque des revendications 1 à 3, **caractérisé en ce que** la transmission à l'ordinateur (7) des valeurs de mesure pour la température (T) ou pour la distribution de température, de données pour l'identification d'une unité (2) et/ou de données concernant l'endroit occupé par une unité (2) a lieu sans fil.

5. Procédé selon l'une quelconque des revendications 1 à 4, **caractérisé en ce que**, à un troisième endroit (9), on compare la température calculée ou mesurée (T) ou la distribution de température de l'unité (2) à au moins une valeur de consigne prédéfinie (Tₛ), afin de déterminer l'aptitude de l'unité (2) pour un traitement ou une manipulation que l'on prévoit, les valeurs de consigne étant de préférence reprises dans un catalogue de traitement thermique spécifique à un matériau (10).

6. Procédé selon la revendication 5, **caractérisé en ce que** l'ordinateur (7) déclenche l'émission d'un signal d'informations lorsqu'au troisième endroit (9), en prenant en compte une marge de tolérance, des déviations entre la température (T) ou la distribution de température calculée ou mesurée et la valeur de consigne prédéfinie (Tₛ) sont constatées.

7. Procédé selon l'une quelconque des revendications 1 à 6, **caractérisé en ce que** l'élément mobile pour la manipulation ou pour le transport de l'unité (2) est une grue.

8. Procédé selon l'une quelconque des revendications 1 à 7, **caractérisé en ce que** la détermination de la température de départ (T) ou de la distribution de température de départ d'une unité (2) au début du calcul de simulation a lieu à partir d'un calcul de simulation précédent du processus de coulée continue et/ou a lieu en utilisant la température (T) ou la distribution de température mesurée au premier endroit (5).

9. Procédé selon l'une quelconque des revendications 1 à 8, **caractérisé en ce que** le modèle thermique de rechange (6) se base sur une équation de la chaleur en deux dimensions ou en trois dimensions, dans lequel, on résout en particulier l'équation de la chaleur (6) à l'aide d'un calcul, au moyen de différences finies, de volumes finis ou d'éléments finis.
